# EUROPÄISCHE PATENTANMELDUNG

(11) **EP 2 957 829 A1**
(43) Veröffentlichungstag der Anmeldung: **23.12.2015**
(21) Anmeldenummer: 14186254.0
(22) Anmeldetag: 24.09.2014
(51) Int. Cl.: F23J 13/04, F16L 25/00, F16L 37/113

(54) **Abgasrohr, Abgasrohrsystem sowie Montageverfahren**

(30) Priorität: 18.06.2014 DE 102014108563
(71) Anmelder: Bächle, Stefano, 8597 Landschlacht (CH)
(72) Erfinder: Bächle, Stefano, 8597 Landschlacht (CH)
(74) Vertreter: Wagner, Kilian

(57) **Zusammenfassung**

Die Erfindung betrifft ein Abgasrohr zur Abgasführung von Heizungsanlagen, insbesondere aus Kunststoff, vorzugsweise aus Polyamid, mit abwechselnd angeordneten starren Glattrohr- und biegbaren Wellrohrabschnitten (3, 2). Erfindungsgemäß ist vorgesehen, dass an das Abgasrohr (1) integrale, als Bajonettverschlussmittel (5a) ausgebildete Sicherungsmittel (5) angeformt sind, die derart ausgebildet sind, dass an diesen ein, bevorzugt hülsenförmiges, zu den Bajonettverschlussmitteln (5a) des Abgasrohres (1) korrespondierende sicherungselementseitige Bajonettverschlussmittel (9) aufweisendes Sicherungselement (8) durch eine axiale Steckbewegung sowie eine Drehbewegung relativ zum Abgasrohr (1) in eine Festlegeumfangsrichtung (F) zum Herstellen eines in axialer Richtung wirksamen Formschlusses festlegbar ist, und dass an das Abgasrohr (1) ein integrales Positionierungshilfegeometriepaar (7) angeformt ist, umfassend eine Anschlaggeometrie (18) zum Begrenzen der Relativerdrehbewegung in der Festlegeumfangsrichtung (F) sowie eine, vorzugsweise in der Festlegeumfangsrichtung (F) vor der Anschlaggeometrie (18) angeordnete, Widerstandgeometrie (17) zum Erhöhen des Kraftaufwandes an einer definierten Umfangsrelativposition von Abgasrohr (1) und Sicherungselement (8) beim Relativverdrehen des Sicherungselementes (8) und des Abgasrohres (1) beim Herstellen und/oder Lösen des in axialer Richtung wirksamen Formschlusses.

## Beschreibung

Die Erfindung betrifft ein Abgasrohr gemäß dem Oberbegriff des Anspruchs 1 zur Abgasführung von Heizungsanlagen, insbesondere aus Kunststoff, vorzugsweise aus Polyamid, mit abwechselnd angeordneten starren Glattrohr- und biegbaren Wellrohrabschnitten. Ferner betrifft die Erfindung ein Abgasrohrsystem gemäß Anspruch 12, das neben einem Abgasrohr ein Sicherungselement umfasst. Zudem betrifft die Erfindung ein Verfahren gemäß Anspruch 15 zum Festlegen eines Abgasrohres an einem, vorzugsweise als Muffenrohr ausgebildeten Rohrstück unter Verwendung eines erfindungsgemäßen Abgasrohrsystems.

Aus der EP 1 024 321 B1 des Anmelders ist ein Abgasrohr aus Kunststoff mit abwechselnd angeordneten starren Glattrohr- und biegbaren Wellrohrabschnitten bekannt. Das bekannte Abgasrohr bildet einen Rohrstrang, aus dem Abgasrohrabschnitte, umfassend jeweils zwei endseitige starre Glattrohrabschnitte und mindestens einen biegbaren Wellrohrabschnitt, beispielsweise durch Sägen oder Schneiden, heraustrennbar sind, insbesondere um winklig zueinander angeordnete oder parallel versetzte starre Rohrstücke (flexibel) über den Abgasrohrabschnitt miteinander zu verbinden, in dem die Glattrohrabschnitte des Abgasrohrs oder des daraus abgetrennten Abgasrohrabschnittes in entsprechende Aufnahmen, insbesondere Muffen der versetzt zueinander angeordneten starren Abgasrohre eingeschoben werden. Die Abdichtung des Abgasstroms erfolgt über in Ringnuten der Muffenrohre angeordnete Dichtungen. Zur axialen Sicherung des Abgasrohrs oder des Abgasrohrabschnittes mit seinen Glattrohr und Wellrohrabschnitten ist es bekannt, in der die Dichtung aufnehmenden Ringnut einen Federring aufzunehmen, der sich radial innen an einem Glattrohrabschnitt des Abgasrohres bzw. des Abgasrohrabschnittes abstützt und dieses klemmend fixiert.

Das bekannte Abgasrohr mit seinen abwechselnden starren Glattrohr- und biegbaren Wellrohrabschnitten hat sich hervorragend in der Praxis bewährt. Es bestehen jedoch Bestrebungen, die Montage des Abgasrohres und insbesondere die axiale Sicherung des Abgasrohres an, insbesondere als Muffenrohr ausgebildeten Rohren zu erleichtern.

Auf dem fachfremden Gebiet der Ableitung von feuchter Luft aus Wäschetrocknern ist ein in der US 7,240,930 B2 beschriebenes Wellrohr bekannt, welches keine abwechselnden Glatt- und Wellrohrabschnitte aufweist, sondern durch axial durchgehend gewindeförmig gewellt ist. Die Verbindung zu benachbarten Rohren erfolgt unmittelbar über eine Gewindeverbindung. Eine Abdichtung, wie sie bei Abgasrohren zwingend ist, ist mit der bekannten Technologie nicht realisierbar. Auch ist nicht erkennbar, wie mit dem bekannten Wellrohr sinnvoller Weise eine dichte Verbindung mit einem Muffenrohr herstellbar sein soll.

Der Erfindung liegt daher die Aufgabe zugrunde, ein hinsichtlich seiner Montierbarkeit, insbesondere axialen Sicherbarkeit verbessertes Abgasrohr anzugeben, sowie ein diesbezüglich optimiertes Abgasrohrsystem. Bevorzugt soll auf die im Stand der Technik notwendigen Federringe zur axialen Sicherung des Abgasrohres verzichtet werden können. Das erfindungsgemäße Abgasrohr bzw. das Abgasrohrsystem sollen dabei eine positionsgenaue Fixierung sicherstellen. Darüber hinaus besteht die Aufgabe darin, ein Verfahren zur komfortablen Handhabung eines nach dem Konzept der Erfindung ausgebildeten Abgasrohrsystems anzugeben.

Diese Aufgabe wird hinsichtlich des Abgasrohres mit den Merkmalen des Anspruchs 1 gelöst, d.h. bei einem gattungsgemäßen Abgasrohr dadurch, dass an das Abgasrohr integrale, als Bajonettverschlussmittel ausgebildete Sicherungsmittel angeformt sind, die derart ausgebildet sind, dass an diesen ein, bevorzugt hülsenförmiges, zu den Bajonettverschlussmitteln des Abgasrohres korrespondierende Bajonettverschlussmittel aufweisendes Sicherungselement durch eine axiale Steckbewegung relativ zu dem Abgasrohr sowie eine Drehbewegung relativ zu dem Abgasrohr in eine Festziehumfangsrichtung zum Herstellen eines in axialer Richtung wirksamen Formschlusses festlegbar ist, und dass an das Abgasrohr ein integrales Positionierungshilfegeometriepaar angeformt ist, umfassend eine Anschlaggeometrie zum Begrenzen der Relativverdrehbewegung in der Festlegeumfangsrichtung sowie eine, vorzugsweise in der Festlegeumfangsrichtung vor der Anschlaggeometrie angeordnete, Widerstandsgeometrie zum Erhöhen des Kraftaufwands an einer definierten Umfangsposition von Abgasrohr und Sicherungselement beim Relativverdrehen des Sicherungselementes und des Abgasrohres beim Herstellen und/oder Lösen in axialer Richtung wirksamen Formschlusses. Bevorzugt weisen sowohl die Anschlaggeometrie als auch die Widerstandsgeometrie jeweils eine in radialer Richtung nach außen ansteigende und eine in radialer Richtung nach innen abfallende Flanke auf, sind also jeweils als eigenständiger Hügel oder Graben bzw. Vertiefung ausgebildet.

Hinsichtlich des Abgasrohrsystems wird die Erfindung mit den Merkmalen des Anspruchs 12 gelöst, wobei das Abgasrohrsystem neben einem Abgasrohr ein Sicherungselement umfasst, das zu den Bajonettverschlussmitteln des Abgasrohres korrespondierende sicherungselementseitige Bajonettverschlussmittel aufweist, um auf diese Weise mit dem Abgasrohr ein in axialer Sicherung wirksamen Formschluss herzustellen, derart, dass ein Abziehen in entgegen einer axialen Aufsteckrichtung sicher verhindert wird. Das Abgasrohr und/oder das Sicherungselement weisen dabei ein integrales Positionierungshilfegeometriepaar auf. Bevorzugt weisen sowohl die Anschlaggeometrie als auch die Widerstandsgeometrie jeweils eine in radialer Richtung nach außen ansteigende und eine in radialer Richtung nach innen abfallende Flanke auf, sind also jeweils als eigenständiger Hügel oder Graben bzw. Vertiefung ausgebildet. Für den Fall der Anordnung des integralen Positionierungshilfegeometriepaares am Abgasrohr, kann bevorzugt ein nach dem Konzept der Erfindung ausgebildetes Abgasrohr eingesetzt werden. Für den Fall, dass das Positionierungshilfegeometriepaar, umfassend eine Anschlaggeometrie sowie eine Widerstandsgeometrie am Sicherungselement vorgesehen wird, muss das Abgasrohr selbst kein Positionierungshilfegeometriepaar aufweisen (was zusätzlich bei Bedarf möglich ist), sondern lediglich entsprechende Wechselwirkungsmittel, insbesondere in Form der Bajonettverschlussmittel, um mit dem Positionierungshilfegeometriepaar des Sicherungselementes in der gewünschten Weise zusammenzuwirken.

Hinsichtlich des Montageverfahrens wird die Erfindung mit den Merkmalen des Anspruchs 15 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrengemäß offenbarte Merkmale als vorrichtungsgemäß offenbart gelten und beanspruchbar sein.

Der Erfindung liegt hinsichtlich des Abgasrohres der Gedanke zugrunde, am Abgasrohr integrale, d.h. einstückig mit dem Abgasrohr ausgebildete Sicherungsmittel in Form von Bajonettverschlussmitteln vorzusehen, d.h. bei dessen Herstellung anzuformen, die derart ausgebildet sind, dass an diesem ein, bevorzugt hülsenförmiges Sicherungselement durch eine, insbesondere kombinierte Steck- und Verdrehbewegung (entlang einer bzw. um eine Aufsteckachse) relativ zum Abgasrohr einen in axialer Richtung wirksamen Formschluss herzustellen, der ein Abziehen des Abgasrohres entgegen der Aufsteckrichtung von den Sicherungselementen und damit von einem Rohrstück sicher verhindert, mit welchem das Sicherungselement wiederum formschlüssig verbunden ist. Anders ausgedrückt umfasst das nach dem Konzept der Erfindung ausgebildete Abgasrohr integrale Bajonettverschlussmittel, die ein Eindrehen eines von dem Abgasrohr separaten Sicherungselement ermöglichen, derart, dass das Abgasrohr nach dieser Relativverdrehbewegung gegen axiales Abziehen am Sicherungselement und damit an einem vorzugsweise als Muffenrohr ausgebildeten Rohrstück gesichert bzw. gehalten ist. Bevorzugt durchsetzt bei einem ein solches Abgasrohr umfassenden Abgasrohrsystem, das Abgasrohr das Sicherungselement in axialer Richtung.

Das nach dem Konzept der Erfindung ausgebildete Abgasrohr zeichnet sich dadurch aus, dass ohne größeren Aufwand die erfindungsgemäßen Sicherungsmittel in Form von Bajonettverschlussmitteln bei der Herstellung des Abgasrohrs angeformt, d.h. vorgesehen werden können und es hierfür keines separaten Produktionsschrittes bedarf.

Darüber hinaus zeichnet sich ein nach dem Konzept der Erfindung ausgebildetes Abgasrohr durch eine äußerst komfortable Handhabbarkeit beim axialen Sichern auf, da das axiale Sichern an einem benachbarten Rohrstück dadurch erfolgt, dass ein Sicherungselement, welches bevorzugt an dem benachbarten Rohrstück in axialer Richtung gesichert ist, (nach einer axialen Relativbewegung zwischen dem Sicherungselement und dem Abgasrohr durch Relativverdrehen zu dem Abgasrohr in einer sich um die Längsachse des Abgasrohres erstreckende Festlegeumfangsrichtung) an diesem festlegbar ist, derart, dass ein in axialer Richtung wirksamer Formschluss resultiert, d.h. derart, dass das Sicherungselement mit seinen zu den Bajonettverschlussmitteln des Abgasrohres korrespondierenden sicherungselementseitigen Bajonettverschlussmitteln die Bajonettverschlussmittel des Abgasrohres hintergreift. Hierdurch kann auf die vergleichsweise aufwändig zu fixierenden Federringe aus dem Stand der Technik verzichtet werden. Bevorzugt ist der Formschluss durch entsprechendes Verdrehen des Sicherungselementes, insbesondere entgegen der vorerwähnten Festlegeumfangsrichtung wieder lösbar.

Bevorzugt sind die axialen Sicherungsmittel des Abgasrohres und/oder die hierzu korrespondierenden Bajonettverschlussmittel des Sicherungselementes derart ausgebildet, dass gleichzeitig beim Relativerdrehen des Sicherungselementes relativ zu dem Abgasrohr eine Axialkraftkomponente erzeugt wird, die das Abgasrohr und das vorzugsweise axial an einem benachbarten Rohrstück gesicherte Sicherungselement axial gegeneinander verspannt. Dies kann dadurch erreicht werden, dass die Bajonettverschlussmittel des Sicherungselementes und/oder die Bajonettverschlussmittel des Abgasrohres eines entsprechenden in axialer Richtung wirksamen Steigungsabschnitt aufweisen, der die gewünschte Axialkraftkomponente erzeugt.

Ein weiteres wesentliches Merkmal des nach dem Konzept der Erfindung ausgebildeten Abgasrohres ist mindestens ein integrales, d.h. angeformtes Positionierungshilfegeometriepaar, welches die Montage des Abgasrohres wesentlich erleichtert. Bevorzugt sind mehrere, insbesondere gleichmäßig in Umfangsrichtung beabstandete Positionierungshilfegeometriepaare vorgesehen. Dieses Positionierungshilfegeometriepaar umfasst eine Anschlaggeometrie zum Begrenzen der Relativbewegung des Sicherungselementes in der Festziehumfangsrichtung durch entsprechende Wechselwirkung mit dem Sicherungselement, insbesondere mit nach radial innen ragenden Wechselwirkungsmitteln des Sicherungselementes, bevorzugt in Form von sicherungselementseitigen Bajonettverschlussmitteln sowie eine, vorzugsweise in der Festlegeumfangsrichtung vor der Anschlagsgeometrie angeordnete Widerstandsgeometrie zum Erhöhen des Kraftaufwandes an einer definierten Umfangsrelativposition von Abgasrohr und Sicherungselement beim Relativverdrehen des Sicherungselementes durch entsprechende, insbesondere reibungskraftbedingte Wechselwirkung mit dem Sicherungselement (genauer von dessen Wechselwirkungsmitteln) während des Herstellens und/oder Lösens des in axialer Richtung wirksamen Formschlusses.

Anders ausgedrückt umfasst das nach dem Konzept der Erfindung ausgebildete Abgasrohr mindestens eine Anschlaggeometrie, an der eine das Sicherungselement zur Begrenzung der Relativverdrehbewegung anschlägt, wodurch eine weitere Relativverdrehbewegung unterbunden wird. Ferner umfasst das Abgasrohr eine Widerstandsgeometrie, die den Widerstand beim Relativverdrehen zwischen Abgasrohr und Sicherungselement erhöht, bevor die Relativbewegung durch Wechselwirkung des Sicherungselementes mit der Anschlaggeometrie gestoppt wird. Die Widerstandsgeometrie gibt dem Benutzer somit eine Rückkopplung, kurz vor Erreichen der Endrelativposition zwischen Sicherungselement und Abgasrohr, in der der Formschluss wirksam wird. Gleichzeitig erschwert die Widerstandgeometrie vorzugsweise ein unbeabsichtigtes Lösen, da beim Überwinden der Widerstandgeometrie ein erhöhter Kraft- bzw. Drehmomentaufwand notwendig ist.

Im Rahmen des Abgasrohrsystems muss das Positionierungshilfegeometriepaar nicht zwingend am Abgasrohr vorgesehen sein, sondern kann zusätzlich oder alternativ an dem Sicherungselement realisiert sein, wobei die Wirkweise jedoch die gleiche ist. Die Anschlaggeometrie bewirkt durch eine entsprechende anschlagende Wechselwirkung mit dem Abgasrohr eine begrenzende Relativverdrehbewegung während die Widerstandsgeometrie das aufzuwendende Drehmoment erhöht, wodurch eine Signalwirkung bzw. Rückkopplungswirkung erzielt wird kurz vor Anschlagen an der Anschlaggeometrie und vorzugsweise gleichzeitig ein unbeabsichtigtes Lösen von Abgasrohr und Sicherungselement erschwert wird.

Insgesamt weist das erfindungsgemäße Abgasrohr demnach eine Vielzahl von Vorteilen gegenüber dem Stand der Technik auf, ohne auf die bekannten Vorteile zu verzichten. So ist es weiterhin möglich und beabsichtigt, aus einem bevorzugt als Rohrstrang ausgebildeten Abgasrohr beliebig lange Abgasrohrabschnitte, z.B. durch Sägen oder Schneiden herauszutrennen, umfassend mindestens einen Glattrohrabschnitt und mindestens einen Wellrohrabschnitt, wobei es bevorzug ist, wenn der herausgetrennte Abgasrohrabschnitt zwei endseitige Glattrohrabschnitte aufweist. Bevorzugt ist der Innendurchmesser der Glattrohrabschnitte zumindest näherungsweise gleich groß wie der Innendurchmesser der Wellrohrabschnitte im Bereich von dessen Wellentälern.

Im Hinblick auf die Ausgestaltung der Glattrohrabschnitte, insbesondere im Hinblick auf deren Axialerstreckung gibt es unterschiedliche Möglichkeiten. Bevorzugt ist die Axialerstreckung der Glattrohrabschnitte so gewählt, dass bei einer näherungsweise mittigen Trennung eines Glattrohrabschnittes zwei Rohre resultieren, deren endseitige, zunächst aus einem gemeinsamen Glattrohrabschnitt resultierende Glattrohrabschnitte so lange bemessen sind, dass beide dichtend jeweils in einem Muffenrohr mit Innendichtung aufgenommen werden können. Um dies zu erreichen, ist weiterbildungsgemäß vorgesehen, dass die Axialerstreckung der Glattrohrabschnitte mehr als 8 cm, vorzugsweise mehr als 10 cm beträgt und ganz besonders bevorzugt aus einem Wertebereich zwischen etwa 9 cm und etwa 19 cm gewählt ist.

Unabhängig von der Längenerstreckung der Glattrohrabschnitte ist es besonders bevorzugt, wenn die Glattrohrabschnitte eine Mittenmarkierung zur Markierung der axialen Mitte aufweisen, wobei es sich weiter bevorzugt um eine vollumfängliche Markierung, beispielsweise in Form einer umlaufenden Nut und/oder Radialerhebung handelt.

Im Hinblick auf die Ausbildung der Wellenkontur des mindestens einen Wellrohrabschnittes gibt es unterschiedliche Möglichkeiten. Bevorzugt handelt es sich längsschnittlich um eine gerundete Wellenkontur, wobei es selbstverständlich auch denkbar ist, eine eckige, beispielsweise rechteckige Wellenkontur zu realisieren.

Im Hinblick auf die konkrete Ausgestaltung der Anschlaggeometrie unabhängig davon, ob diese am Abgasrohr oder im Rahmen des Systems am Sicherungselement vorgesehen ist, gibt es unterschiedliche Möglichkeiten. So ist es denkbar und bevorzugt, die am Abgasrohr vorgesehene Anschlaggeometrie als radiale Erhöhung auszubilden, also als eine Geometrie, die sich in radialer Richtung nach außen, insbesondere über die Mantelfläche des Glattrohrabschnittes erstreckt. Bevorzugt ist auch die Widerstandsgeometrie als radiale Erhöhung ausgebildet, wobei die Anschlagsgeometrie radial weiter nach außen ragt als die Widerstandsgeometrie, um somit die Verdrehbewegung zu begrenzen und nicht nur den Kraftaufwand zu erhöhen, wie dies bei der Widerstandsgeometrie der Fall ist.

Auch ist es alternativ denkbar, die Anschlaggeometrie als radiale Vertiefung auszubilden, ebenso wie die Widerstandsgeometrie - dies bedeutet, dass sich die Anschlaggeometrie und die Widerstandsgeometrie nach radial innen über die Innenmantelfläche des Glattrohrabschnittes erstrecken, wobei bevorzugt die Tiefenerstreckung bzw. Radialerstreckung der Anschlaggeometrie nach innen größer ist als die Erstreckung der Widerstandsgeometrie in die gleiche Richtung.

Denkbar ist auch eine Ausführungsform, bei der sich die Anschlaggeometrie und die Widerstandsgeometrie in unterschiedliche Radialrichtungen erstrecken.

Besonders bevorzugt ist die zuvor beschriebene Variante, bei der sowohl die Anschlaggeometrie als auch die Widerstandsgeometrie als radiale Erhöhungen ausgebildet sind, da sich derart ausgestaltete Geometrien besonders einfach bei einem bevorzugten Herstellungsverfahren des Abgasrohres durch Blasformen realisieren lassen. Besonders zweckmäßig ist es dabei, wenn vorgenannte Geometrien von der Rohrinnenseite her betrachtet als sich nach außen erstreckende Vertiefungen ausgebildet sind. Bei der Anordnung des Positionierungshilfegeometriepaares an den Sicherungsmitteln ragen die Anschlaggeometrie und die Widerstandsgeometrie bevorzugt nach radial innen.

Besonders zweckmäßig ist es zur Erreichung des gewünschten Effektes, wenn die betragsmäßige Radialerstreckung der Anschlaggeometrie nach radial innen oder nach radial außen größer ist, insbesondere mindestens doppelt so groß ist, wie die betragsmäßige Radialerstreckung der Widerstandsgeometrie nach radial innen oder nach radial außen, bevorzugt gemessen ausgehend von einem Außendurchmesser eines der Glattrohrabschnitte. Besonders zweckmäßig hat es dabei herausgestellt, wenn die Radialerstreckung der Widerstandsgeometrie kleiner ist als 1 mm , bevorzugt zumindest näherungsweise 0,8 mm beträgt und die Radialerstreckung der Anschlaggeometrie größer ist als 1 mm, vorzugsweise größer ist als 1,5 mm, ganz besonders zumindest näherungsweise 1, 8 mm beträgt.

Wie eingangs bereits erwähnt ist es besonders bevorzugt, wenn die Widerstandsgeometrie in der Festziehumfangsrichtung vor der Anschlagsgeometrie angeordnet ist, was bedeutet, dass das Sicherungselement beim Festlegen bzw. beim Relativverdrehen in der Festlegeumfangsrichtung zuerst mit der Widerstandsgeometrie in Wechselwirkung tritt und danach erst in der Anschlagsgeometrie, vorzugsweise nach vollständigem Überwinden der Widerstandsgeometrie.

Besonders bevorzugt ist es dabei, wenn die Widerstandsgeometrie und die Anschlaggeometrie (unabhängig von der Anordnung am Abgasrohr oder dem Sicherungselement) in Umfangsrichtung voneinander beabstandet sind. Wie später noch im Rahmen des Systems erläutert werden wird, ist es besonders bevorzugt, wenn dieser Abstand zumindest der Umfangserstreckung von Wechselwirkungsmitteln des Sicherungselementes entspricht, mit denen das Sicherungselement mit den Geometrien in Wechselwirkung tritt. Bevorzugt ist der Abstand der Geometrien eines Positionierungshilfegeometriepaares in Umfangsrichtung größer als die Umfangserstreckung der diesen zugeordneten Wechselwirkungsmittel.

Ganz besonders bevorzugt ist eine Ausführungsform, bei der die Anschlaggeometrie und/oder die Widerstandsgeometrie auf einer von einem Aufstecken des Abgasrohres zum Aufstecken des Sicherungselementes abgewandten Seite der Bajonettverschlussmittel angeordnet sind. Das Aufsteckende ist dabei ein freies Ende eines endseitigen Glattrohrabschnittes, also eins von dem benachbarten Wellrohrabschnitt beabstandetes freies Ende. Die Anschlaggeometrie und/oder die Widerstandsgeometrie sind/ist also bevorzugt auf der von dem endseitigen Glattrohrabschnitt abgewandten Seite der Bajonettverschlussmittel angeordnet, insbesondere um mit den Bajonettverschlussmitteln des Sicherungselementes in Wechselwirkung zu treten, die in diesem Fall die Wechselwirkungsmittel bilden.

Im Hinblick auf die konkrete Ausgestaltung der Bajonettverschlussmittel des Abgasrohres ist es bevorzugt, wenn diese mindestens zwei in Umfangsrichtung beabstandete, vorzugsweise mehr als zwei, insbesondere gleichmäßig in Umfangsrichtung verteilte, nach radial außen ragende und sich in Umfangsrichtung erstreckende Radialfortsätze aufweist, die sich bevorzugt über einen Umfangswinkel von mindestens 5° in Umfangsrichtung erstrecken und die hintergriffen werden können von entsprechenden (sicherungselementseitigen) Bajonettverschlussmitteln des Sicherungselementes in der Art eines Bajonettverschlusses zur axialen Sicherung. Bevorzugt sind die Bajonettverschlussmittel des zugehörigen Sicherungselementes dabei als nach radial innen ragende Fortsätze ausgebildet, die sich ebenfalls in Umfangsrichtung erstrecken, vorzugsweise um mindestens 5° in Umfangsrichtung.

Als besonders vorteilhaft hat es sich herausgestellt, wenn jedem Glattrohrabschnitt des Abgasrohres Bajonettverschlussmittel und mindestens ein Positionierungshilfegeometriepaar (umfassend eine Anschlaggeometrie und eine Widerstandsgeometrie) zugeordnet sind, vorzugsweise entweder nur im Bereich eines axialen Endes des jeweiligen Glattrohrabschnittes oder an beiden axialen Endbereichen des jeweiligen Glattrohrabschnittes. Bei der letztgenannten Ausführungsform ist es möglich, einen Glattrohrabschnitt des rohrstrangförmigen Abgasrohres in zwei selbstständige Glattrohrabschnitte von resultierenden Abgasrohrabschnitten aufteilen zu können, wobei dann beide selbstständigen Glattrohrabschnitte mit jeweils einem Sicherungselement an einem Rohrstück fixierbar sind.

Besonders bevorzugt ist es, wenn die Wellrohrabschnitte jeweils, insbesondere vollständig bzw. axial durchgehend von Außengewindeabschnitten gebildet sind. Hier sind dann nicht voneinander separate Wellen vorgesehen, sondern diese werden von einem mit einer Steigung versehenen Außengewinde gebildet, welche zwangsläufig nicht in separaten Radialebenen verläuft, sondern sich entlang der Axialerstreckung des Abgasrohres mit der vorgegebenen Steigung entlang windet.

Bevorzugt läuft das Außengewinde in einem hierzu axial benachbarten Glattrohrabschnitt aus, insbesondere indem die Höhe (Radialerstreckung) der Gewindegangwindung des Außengewindes in Richtung Glattrohrabschnitt langsam in Umfangsrichtung abnimmt. Anders ausgedrückt steigt die Höhe in Umfangsrichtung der Gewindegangwindung ausgehend von dem Glattrohrabschnitt in Umfangsrichtung bevorzugt an.

Alternativ und besonders bevorzugt ist eine Ausführungsform, bei der die Wellrohrabschnitte jeweils mehrere ringförmige und in axial benachbarten, parallelen Radialebenen, bezogen auf eine Axialerstreckung des Abgasrohrs angeordnete Wellen aufweisen und dass die Bajonettverschlussmittel axial benachbart zu den Wellen, insbesondere in einem an einem Glattrohrabschnitt angrenzenden Bereich vorgesehen sind. Bevorzugt befindet sich das mindestens eine integrale Positionierungshilfegeometriepaar axial zwischen den Bajonettverschlussmitteln und dem benachbarten Wellrohrabschnitt (unabhängig von der konkreten Ausgestaltung der Wellen als parallele Ringe oder Außengewinde). Auch ist es möglich, umfangsgeschlossene Wellenringe und eine Außengewindewellengeometrie zu kombinieren.

Im Hinblick auf eine sehr einfache Fertigbarkeit des erfindungsgemäßen Abgasrohres mit integralen Sicherungsmitteln sowie integralen Positionierungshilfegeometriepaaren, insbesondere im Extrusionsblasformverfahren ist es bevorzugt, wenn die Sicherungsmittel (Bajonettverschlussmittel) und/oder das Positionierungshilfegeometriepaar innen hohl ausgebildet sind. Dies bedeutet, dass weiterbildungsgemäß die Sicherungsmittel und/oder die Positionierungshilfe und/oder das Positionierungshilfegeometriepaar von der Abgasrohrinnenseite her betrachtet nut- oder rinnförmig ausgebildet sind/ist, insbesondere als sich nach außen und in Umfangsrichtung erstreckende Vertiefung.

Im Hinblick auf eine weitere optimierte Fertigbarkeit hat es sich als vorteilhaft erwiesen, wenn die Abgasrohrwandstärke der Sicherungsmittel (Bajonettverschlussmittel) und/oder des Positionierungshilfegeometriepaares zumindest näherungsweise eine Abgasrohrwandstärke eines der Glattrohrabschnitte und/oder eines der Wellrohrabschnitte entspricht, wobei es besonders bevorzugt ist, wenn die Wandstärke des Abgasrohrs axial durchgängig zumindest näherungsweise konstant ist. Bevorzugt ist die Wandstärke aus einem Dickenbereich zwischen etwa 0,8 mm und 2,5 mm gewählt, insbesondere zwischen 1 mm und 2 mm, ganz besonders bevorzugt beträgt die Wandstärke zumindest näherungsweise 1,2 mm.

Besonders bevorzugt ist es, wenn in Weiterbildung der Erfindung am Abgasrohr eine Markierung (insbesondere als Einformung bzw. Erhöhung oder Vertiefung) vorgesehen ist, die einen Umfangsspalt bzw. einen Abstand in Umfangsrichtung der Bajonettverschlussmittel markiert, durch die hindurch in axialer Richtung ein Bajonettverschlussgegenabschnitt des Sicherungselementes verschoben werden kann, um danach im Rahmen einer Drehbewegung in Wechselwirkung zu treten mit dem Positionierungshilfegeometriepaar bzw. um den Bajonettverschluss durch Verdrehen axial hinter die Bajonettverschlussmittel des Abgasrohres zu verriegeln. Mit anderen Worten ist weiterbildungsgemäß am Abgasrohr eine Markierung, insbesondere eine radiale Erhöhung oder radiale Vertiefung vorgesehen, die einen Abstand zwischen zwei in Umfangsrichtung beabstandeten Radialfortsätzen der Bajonettverschlussmittel und damit eine Montage- und Demontageposition markiert, in welcher das Sicherungselement axial aufgeschoben bzw. wieder abgezogen werden kann. Bevorzugt ist im Rahmen des später noch zu erläuternden Abgassystems am Sicherungselement eine Gegenmarkierung vorgesehen, die die Position eines nach radial innen ragenden Fortsatzes der sicherungselementseitigen Bajonettverschlussmittel markiert, wobei, wenn die Markierung und die Gegenmarkierung axial fluchten, sichergestellt ist, dass sich die sicherungselementseitigen Bajonettverschlussmittel, insbesondere einen radial nach innen ragender Fortsatz dieser Bajonettverschlussmittel an einer Umfangsposition befindet, in der das Sicherungselement axial so verstellbar ist, dass nach radial innen ragende, sicherungselementseitige Bajonettverschlussmittel bzw. der nach radial innen ragende Radialfortsatz durch den Umfangsspalt bzw. den Umfangsabstand zwischen zwei Radialfortsätzen der Bajonettverschlussmittel des Abgasrohres axial hindurch geschoben werden kann, um dann nach einer Drehbewegung in Umfangsrichtung hinter den Bajonettverschlussmitteln des Abgasrohres positioniert zu werden, wobei bei dieser Drehbewegung die Wechselwirkung mit den Positionierungshilfegeometriepaar stattfindet. Bevorzugt ist die Markierung axial beabstandet von dem Spalt bzw. dem Abstand in Umfangsrichtung zwischen zwei radialen Fortsätzen der Bajonettverschlussmittel des Abgasrohres. Ganz besonders bevorzugt ist es, wenn die Markierung, insbesondere die Erhöhung oder Vertiefung, in eine Welle des Wellrohrabschnittes eingeformt ist. Hinsichtlich der Realisierung der Gegenmarkierung am Sicherungselement ist es von Vorteil, wenn diese ebenfalls als Erhöhung oder Vertiefung vorgesehen ist, wobei es ganz besonders bevorzugt ist, wenn der Benutzer durch entsprechende Symbole auf dem Sicherungselement über eine Öffnungs-Umfangsrichtung und/oder eine Verriegelungs-Umfangsrichtung informiert wird.

Um eine optimale Anschlag- bzw. Stoppwirkung der Anschlaggeometrie zu bewirken, ist in Weiterbildung der Erfindung mit Vorteil vorgesehen, dass eine Wand, an der die Wechselwirkungsmittel bei einer Drehbewegung des Sicherungselementes in Umfangsrichtung anschlagen können, zumindest näherungsweise radial verläuft. Ein exakt radialer Verlauf ist im Hinblick auf eine gute Entformbarkeit des Abgasrohres bei dessen Herstellung aus einem Werkzeug problematisch. Daher beträgt der Winkel vorgenannter Anschlagwand zur Radialen, vorzugsweise zwischen 0,5° und 5°, ganz besonders bevorzugt zwischen 0,5° und 2°.

Zusätzlich oder alternativ ist es von Vorteil, wenn die Widerstandsgeometrie des Positionierungshilfegeometriepaares so ausgebildet ist, dass die in Umfangsrichtung der zugehörigen Anschlaggeometrie zugewandte Wand zur Wechselwirkung mit den Wechselwirkungsmitteln des Sicherungselementes steiler ausgebildet ist, also einen kleineren Winkel mit einer Radialen einschließt als die bevorzugt eher als flache Rampe ausgebildete, in Umfangsrichtung von der Anschlaggeometrie wegweisende Wand, welche während der Verriegelungsdrehbewegung überwunden werden muss. Durch vorgenannte Maßnahme ist die haptische Rückkopplung beim Lösen des Sicherungselementes besonders gut spürbar, sodass der Benutzer besonders gut erspüren kann, wenn er zum Lösen der Bajonettverschlussverbindung das Sicherungselement bzw. die Wechselwirkungsmittel über die Widerstandsgeometrie in eine Umfangsposition bewegt, aus der ein axiales Herausziehen bzw. Lösen möglich ist.

Die Erfindung führt auch auf einen Abgasrohrabschnitt, der hergestellt ist durch Abtrennen eines Abschnittes von dem erfindungsgemäßen Abgasrohr. Der abgetrennte Abgasrohrabschnitt umfasst mindestens einen Glattrohr- und Wellrohrabschnitt sowie integrale Sicherungsmittel und ein Positionierungshilfegeometriepaar.

Ferner führt die Erfindung auf die Verwendung eines nach dem Konzept der Erfindung ausgebildeten Abgasrohres oder eines Abgasrohrabschnittes, vorzugsweise aus Kunststoff, zur Abgasführung einer Heizungsanlage, insbesondere in einem Gebäude (Immobilie), wobei ganz besonders bevorzugt ein Glattrohrabschnitt des Abgasrohres bzw. des Abgasrohrabschnittes im Rahmen eines Systemsgedankens in ein Muffenrohr eingesteckt ist, in welchem eine Ringdichtung vorgesehen ist, die außen dichtend an dem Glattrohrabschnitt des Abgasrohres bzw. des Abgasrohrabschnittes anliegt. Das Sicherungselement verbindet das Muffenrohr mit den Bajonettverschlussmitteln des Abgasrohres bzw. des Abgasrohrabschnittes, wobei ganz besonders bevorzugt von dem Sicherungselement ein Ringwulst des Muffenrohres axial übergriffen wird, wobei noch weiter bevorzugt die vorgenannte Ringdichtung innerhalb des Ringwulstes angeordnet ist.

Die Erfindung führt auch auf ein Abgasrohrsystem. Dieses umfasst neben einem Abgasrohrsicherungselement, ein vorzugsweise hülsenförmiges Sicherungselement zum Herstellen eines axial wirksamen Formschlusses zur Sicherung gegen Abziehen zwischen dem Sicherungselement und dem Abgasrohr bzw. dem Abgasrohrabschnitt. Hierzu umfasst das Sicherungselement als auch das Abgasrohr Bajonettverschlussmittel die durch eine, insbesondere kombinierte, Steck-Drehbewegung in der Art eines Bajonettverschlusses zusammenwirken. Gemäß einer ersten Alternative des Abgasrohrsystems wird ein nach dem Konzept der Erfindung ausgebildetes Abgasrohr eingesetzt, welches das zuvor beschriebene integrale Positionierungshilfegeometriepaar aufweist, wobei in diesem Fall an dem Sicherungselement Wechselwirkungsmittel, insbesondere in Form des Bajonettverschlussmittel zum Zusammenwirken mit dem Positionierungshilfegeometriepaar des Abgasrohres vorgesehen sind.

Gemäß einer zweiten Alternative ist zusätzlich oder alternativ zu dem Vorsehen mindestens eines Positionierungshilfegeometriepaares am Abgasrohr mindestens ein Positionierungshilfegeometriepaar, umfassend eine Anschlaggeometrie und eine Widerstandsgeometrie, am Sicherungselement vorgesehen, wobei in diesem Fall das Abgasrohr Wechselwirkungsmittel, insbesondere in Form der Bajonettverschlussmittel, aufweist, um mit dem sicherungselementseitigen Positionierungshilfegeometriepaar in Wechselwirkung zu treten. Im Hinblick auf die Ausgestaltung des Positionierungshilfegeometriepaares am Sicherungselement wird auf die vorhergehende Beschreibung im Zusammenhang mit dem Abgasrohr verwiesen. Besonders bevorzugt ist eine Ausführungsform, bei der die Anschlaggeometrie und/oder Widerstandsgeometrie als nach radial innen ragende Erhöhungen ausgebildet sind, deren Radialerstreckung sich bezogen auf den Außenumfang oder den Innenumfang eines benachbarten Glattrohrabschnittes unterscheidet, um so die unterschiedlichen Funktionen durch entsprechende Wechselwirkung mit den Wechselwirkungsmitteln, insbesondere den Bajonettverschlussmitteln des Abgasrohres erfüllen zu können.

Besonders bevorzugt ist eine Ausführungsform des Abgasrohrsystems, bei der die Wechselwirkungsmittel bei hergestelltem, in axialer Richtung wirksamen Formschluss in Umfangsrichtung zwischen der Anschlaggeometrie und der Widerstandgeometrie des Positionierungshilfegeometriepaares angeordnet sind.

Bevorzugt ist die Widerstandsgeometrie von der Wechselwirkungsmitteln in Umfangsrichtung beim Herstellung und/oder Lösen des in axialer Richtung wirksamen Formschlusses überdrehbar, wobei hierzu ein etwas erhöhter Kraftaufwand notwendig ist. Besonders bevorzugt ist es weiterhin, wenn die Anschlaggeometrie von den Wechselwirkungsmitteln nicht in Umfangsrichtung überdrehbar ist oder nur unter Aufbringung eines Drehmomentes, welches größer ist, vorzugsweise wesentlich größer, ganz besonders bevorzugt mindestens doppelt so groß ist wie das Drehmoment, das zum Überdrehen der Widerstandsgeometrie aufgebracht werden muss. Eine Überdrehmöglichkeit der Anschlaggeometrie sollte im Regelfall nicht vorgesehen sein. Es ist jedoch denkbar, dass durch Aufbringen eines sehr großen Drehmomentes sich das Abgasrohr aufgrund seiner geringen Wandstärke so stark deformiert, dass für diesen Fall die Anschlaggeometrie (bei unsachgemäßer Montage bzw. beim Aufbringen eines zu großen Drehmomentes) trotzdem überdrehbar ist.

Die Erfindung führt auch auf ein Verfahren zum Festlegen eines Abgasrohres oder eines hiervon abgetrennte Abgasrohrabschnittes des erfindungsgemäßen Abgasrohrsystems an einem, vorzugsweise als Muffenrohr ausgebildeten Rohrstück, wobei das Verfahren zur Herstellung eines wirksamen Formschlusses vorsieht das Sicherungselement und das Abgasrohr bzw. der Abgasrohrabschnitt im Rahmen einer axialen Steckbewegung und einer Verdrehbewegung in Umfangsrichtung aneinander zu fixieren.

Ganz besonders bevorzugt ist es, wenn, insbesondere vor dem Relativverdrehen, das Sicherungselement am Rohrstück axial gesichert wird, insbesondere indem das Sicherungselement auf das Rohrstück axial aufgeschoben wird, derart, dass das Sicherungselement einen Rohrabschnitt, insbesondere einen Ringwulst in radialer Richtung nach innen übergreift. Für den Fall, dass entsprechend federnd ausgebildete Hinterschnittabschnitte am Sicherungselement vorgesehen sind (was bevorzugt ist), kann das Aufschieben auch in der Befestigungsrichtung des Glattrohrabschnittes am Rohrstück erfolgen, indem die Hintergreifabschnitte über den Ringwulst des Rohrstückes geschoben werden und dann nach radial innen federn und das Sicherungselement in axialer Richtung sichern. Bei der Relativverdrehbewegung von Sicherungselement und Abgasrohr bzw. Abgasrohrabschnitt kommen die Wechselwirkungsmittel des Sicherungselementes mit dem Positionierungshilfegeometriepaar des Abgasrohres in Wechselwirkung und/oder Wechselwirkungsmittel des Abgasrohres mit einem Positionierungshilfegeometriepaar des Sicherungselementes, jedenfalls dergestalt, dass durch entsprechende Wechselwirkung mit der Widerstandsgeometrie vor Erreichen der Anschlagsgeometrie der Kraftaufwand erhöht wird, wobei der Kraftaufwand vorzugsweise vor Erreichen der Anschlaggeometrie, welche die Verdrehbewegung beendet bzw. begrenzt wieder nachlässt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 und Fig. 2: unterschiedliche Darstellungen eines nach dem Konzept der Erfindung ausgebildeten Abgasrohres mit Bajonettverschlussmitteln sowie Positionierungshilfegeometriepaaren,
- Fig. 3 bis Fig. 10: unterschiedliche Ansichten, teilweise geschnitten und teilweise Detailansichten eines nach dem Konzept der Erfindung ausgebildeten Abgasrohrsystems, konkret von zwei solchen Abgasrohrsystemen, die mit einem Rohrstück, hier einem Muffenrohrstück und beispielhaft einem Doppelmuffenrohrstück verbunden sind,
- Fig. 11 bis Fig. 17: unterschiedliche Ansichten, teilweise geschnitten und teilweise Detailansichten eines alternativen, nach dem Konzept der Erfindung ausgebildeten Abgasrohres zur Wechselwirkung bzw. zur Ausbildung eines Systems mit einem in den Fig. 18 bis 25 gezeigten Sicherungselementes und
- Fig. 18 bis Fig. 25: unterschiedliche Ansichten, teilweise geschnitten und teilweise Detailansichten eines Sicherungselementes zur Wechselwirkung mit einem in den Fig. 11 bis 17 gezeigten Abgasrohres.

In den Figuren sind gleiche Elemente und Elemente mit der gleichen Funktion mit den gleichen Bezugszeichen gekennzeichnet.

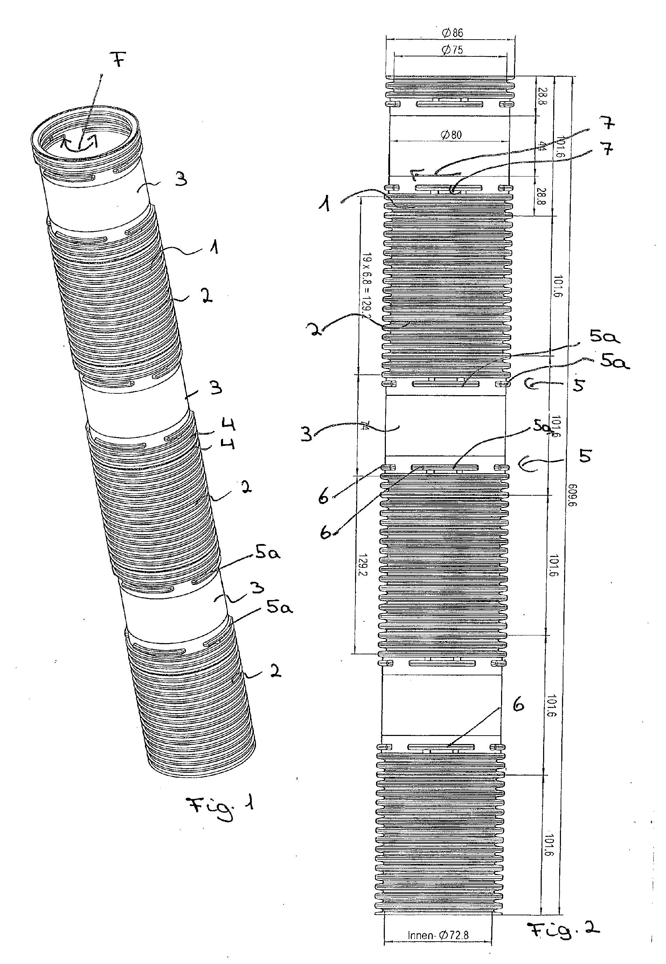

In den Figuren 1 und 2 ist ein Ausschnitt eines Abgasrohres 1 aus Kunststoff gezeigt, welches im Extrusions-Blasverfahren hergestellt wurde. Zu erkennen sind abwechselnd angeordnete Wellrohrabschnitte 2 und Glattrohrabschnitte 3. Bevorzugt umfasst das Abgasrohr mehr als die gezeigten Wellrohr- und Glattrohrabschnitte 2, 3 und ist als Rohrstrang aufrollbar. Die Wellrohrabschnitte 2 sind biegbar und ermöglichen diese Aufrollbarkeit.

Die Glattrohrabschnitte 3 dienen zum axialen Einschieben in ein vorzugsweise als Muffenrohr ausgebildetes Rohrstück. In dem gezeigten Ausführungsbeispiel bestehen die Wellrohrabschnitte zwar jeweils aus einer Vielzahl von axial aneinander angrenzenden Wellen 4, die von innen her betrachtet als umfangsgeschlossene Ringnuten ausgebildet sind. Die Wellen befinden sich in axial zueinander benachbarten, parallelen Radialebenen, d.h. sie sind steigungsfrei ausgebildet, wie dies von aus dem Stand der Technik beschriebenen Wellrohren bekannt ist. Die Kontur der Wellen 4 ist von außen her betrachtet zumindest näherungsweise trapezförmig, wobei auch andere Konturen wie beispielsweise gerundete Konturen oder rechteckige Konturen realisierbar sind.

Im Gegensatz zu aus dem Stand der Technik bekannten Abgasrohren weist das Abgasrohr 1 integrale Sicherungsmittel 5 in Form von Bajonettverschlussmitteln 5a auf. Diese sind ausgebildet in der Form von in Umfangsrichtung beabstandeten und jeweils auf derselben axialen Höhe befindlichen, nach radial außen weisenden Radialfortsätzen 6, die zusammen mit geeigneten Bajonettverschlussmitteln (insbesondere nach radial innen weisende Radialfortsätze) eine später noch zu erläuterndes Sicherungselementes in der Art eines Bajonettverschlusses zusammenwirken können.

Hierzu müssen die Bajonettverschlussmittel des Sicherungselementes axial zwischen zwei benachbarten Radialfortsätzen 6 hindurchgeschoben und dann in einer Festlegeumfangsrichtung F verdreht werden, so dass sie die Radialfortsätze 6 in axialer Richtung hintergreifen.

Um zum einen die Relativverdrehbewegung zu begrenzen und zum anderen das baldige Erreichen dieser Endstellung zu signalisieren, sind an das Abgasrohr 1 eine Vielzahl von Positionierungshilfegeometriepaaren 7 angeformt, die mit entsprechenden Wechselwirkungsmitteln des Sicherungselementes, insbesondere den Bajonettverschlussmitteln des Sicherungselementes zusammenwirken. Die Positionierungshilfegeometriepaare 7 umfassen eine Widerstandsgeometrie, die in der Festlegeumfangsrichtung F vor einer Arretierungsgeometrie angeordnet ist, was später noch im Detail erläutert werden wird.

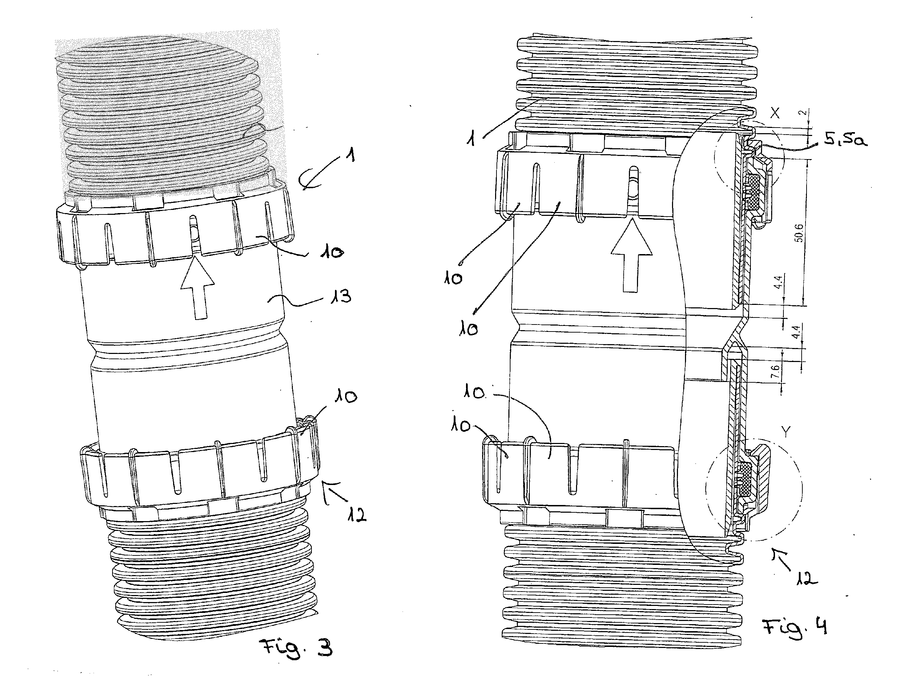

In den Fig. 3 bis 10 ist teilweise ein einziges und sind teilweise zwei Abgasrohrsysteme 12 gezeigt, die beispielhaft mit einem (gemeinsamen) Rohrstück verbunden sind. Die Abgasrohrsysteme 12 umfassen jeweils ein hülsenförmiges Sicherungselement 8 zum Zusammenwirken mit dem Abgasrohr. Bei dem Sicherungselement 8 handelt es sich um ein Kunststoffspritzgussteil welches über nach radial innen weisende und in Umfangsrichtung beabstandete Radialfortsätze aufweisende sicherungselementseitige Bajonettverschlussmittel 9 (Eingriffsmittel) verfügt, die durch Relativverdrehen relativ zu den Sicherungsmitteln 5, d.h. den Bajonettverschlussmitteln 5a des Abgasrohres mit diesen in der Art eines Bajonettverschlusses zusammenwirken. Axial beabstandet von den sicherungselementseitigen Bajonettverschlussmitteln 9 sind mehrere gleichmäßige in Umfangsrichtung beabstandete Hintergriffabschnitte 10 vorgesehen, die laschenartig ausgebildet sind und mit denen eine Ringwulst 16 eines an dem Abgasrohr 1 festzulegenden Rohrstückes 13 übergriffen werden kann.

Zu erkennen ist, dass das Sicherungselement 8, welches im montierten Zustand von dem Abgasrohr 1 durchsetzt ist, Wechselwirkungsmittel 11 in Form der sicherungselementseitigen Bajonettverschlussmittel 9 aufweist, um mit dem später noch im Detail zu erläuternden Positionierungshilfegeometriepaar 7 zusammenwirken zu können.

Wie aus den Fig. 3 bis 10 zu erkennen ist, sind Abgasrohre 1 mit jeweils einem endseitigen Glattrohrabschnitt 3 in eine Muffe eines Rohrstückes 13 eingeschoben, derart, dass eine in einer eingeformten Ringnut 14 des Rohrstückes aufgenommene Ringdichtung 15 von radial außen nach radial innen dichtend am Außenumfang des zugehörigen Glattrohrabschnittes 3 des Abgasrohres 1 anliegen kann.

Die Ringnut 14 bildet außen die vorerwähnte Ringwulst 16, welche hintergriffen ist von den Hintergriffabschnitten 10 des Elementes 8, welches mit seinen sicherungselementseitigen Bajonettverschlussmitteln 9 die Bajonettverschlussmittel 5a des Abgasrohres 1 hintergreift, so dass das Abgasrohr 1 gegen Abziehen am Rohrstück 13 gesichert ist.

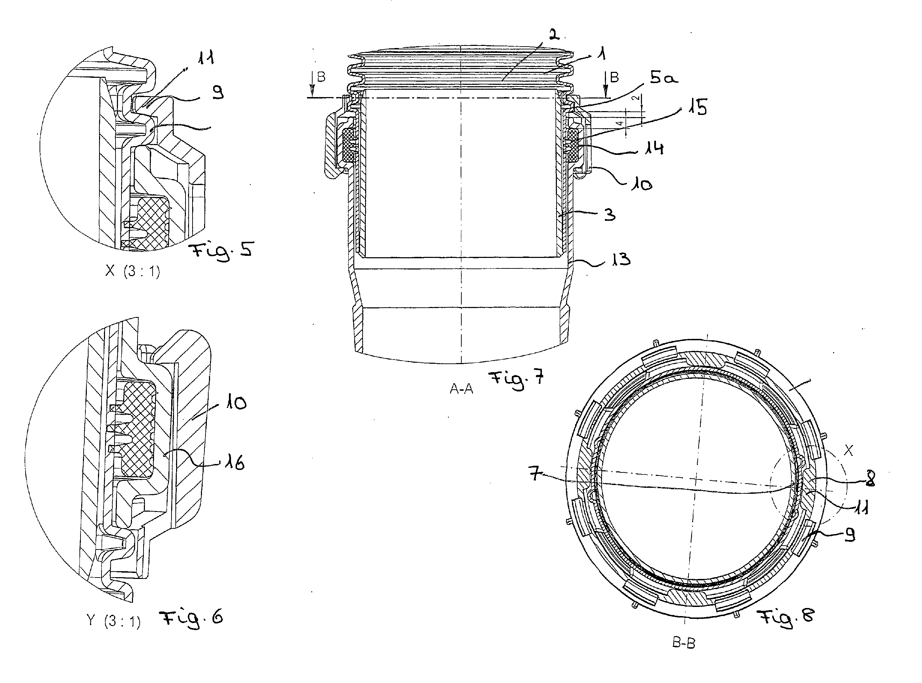

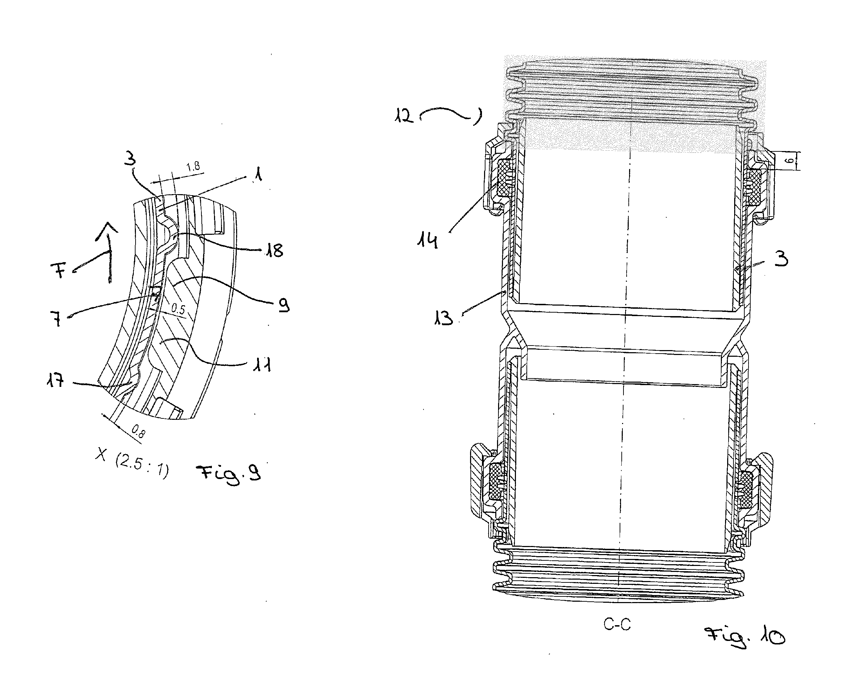

In den Figuren 8 und 9 in einer vergrößerten Darstellung ist eine Positionierungshilfegeometrie 7 gezeigt, diese umfasst eine in der Festlegeumfangsrichtung F, welche durch das Sicherungselement 8 relativ zu dem Abgasrohr 1 verdreht werden muss, vordere Widerstandsgeometrie 17 und eine in der Festlegeumfangsrichtung F von der Widerstandsgeometrie 17 beabstandete Anschlaggeometrie 18. Beide Geometrien 17, 18 weisen jeweils eine in radialer Richtung nach außen ansteigende und eine in radialer Richtung nach innen abfallende Flanke auf. Der Abstand zwischen der Widerstandsgeometrie 17 und der Anschlaggeometrie 18 entspricht der Umfangserstreckung der Wechselwirkungsmittel 11, hier in Form der sicherungselementseitigen Bajonettverschlussmittel 9 zuzüglich eines Spiels, so dass die Wechselwirkungsmittel 11 bei hergestelltem Formschluss in Umfangsrichtung zwischen der Widerstandsgeometrie 17 und der Anschlaggeometrie 18 eines Positionierungshilfegeometriepaares 7 aufgenommen ist.

Sowohl die Widerstandsgeometrie 17 als auch die Anschlaggeometrie 18 sind als sich nach radial außen über den zugehörigen Glattrohrabschnitt 3 erstreckende Erhöhungen ausgebildet, wobei sich die Radialerstreckung von Anschlaggeometrie 18 und Widerstandsgeometrie 18 unterscheidet. Die Radialerstreckung der Anschlaggeometrie ist im gezeigten Ausführungsbeispiel mehr als doppelt so groß wie die Radialerstreckung der Widerstandsgeometrie. In der Folge kann die Widerstandsgeometrie 17 beim Relativverdrehen des Sicherungselementes 8 zu dem Abgasrohr 1 überdreht werden, mit etwas erhöhtem Kraftaufwand bzw. Drehmomentaufwand, während die Anschlaggeometrie 18 einen die Relativbewegung begrenzenden Anschlag bildet. Allgemein bevorzugt ist es, wenn bei zwischen der Widerstandsgeometrie 17 und der Anschlaggeometrie 18 befindlichen Wechselwirkungsmitteln 11 ein minimaler Radialabstand zwischen den Wechselwirkungsmitteln 11, hier in Form der sicherungselementseitigen Bajonettverschlussmitteln 9 und dem Außenumfang des Abgasrohres 1 ein Spiel vorhanden ist, hier lediglich beispielhaft von 0,5 mm. Das Spiel sollte jedenfalls grundsätzlich geringer sein als die Radialerstreckung der Widerstandsgeometrie 17 um insofern die gewünschte Krafterhöhung beim Überdrehen der Widerstandsgeometrie 17 zu bewirken.

Wie sich aus einer Zusammenschau der Figuren 7 bis 9 ergibt, befindet sich das Positionierungshilfegeometriepaar 7 auf der vom freien Ende des Abgasrohres abgewandten Seite der Bajonettverschlussmittel 5a, d.h. axial zwischen den Bajonettverschlussmitteln 5a und dem dann unmittelbar angrenzenden Wellrohrabschnitt 2.

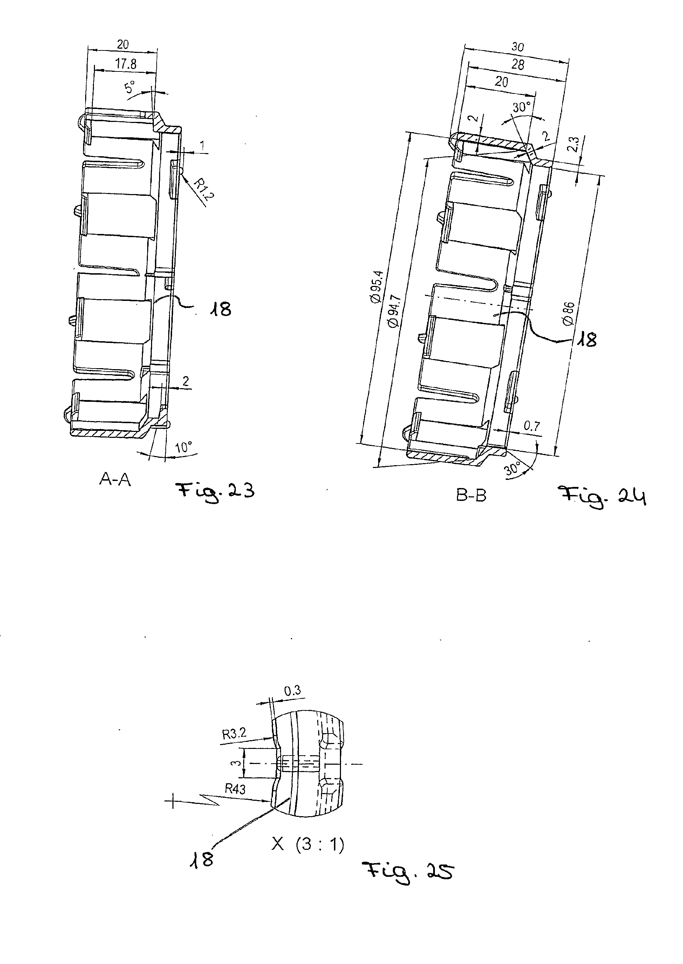

Im Folgenden werden die Ausführungsbeispiele gemäß den Fig. 1 bis 25 beschrieben, die von ihrer Funktion her im Wesentlichen den zuvor beschriebenen Ausführungsbeispielen entsprechen, sodass zur Vermeidung von Wiederholungen im Wesentlichen nur auf Unterschiede eingegangen wird. Bezüglich der Gemeinsamkeiten wird auf die Fig. 1 bis 10 mit zugehöriger Figurenbeschreibung verwiesen.

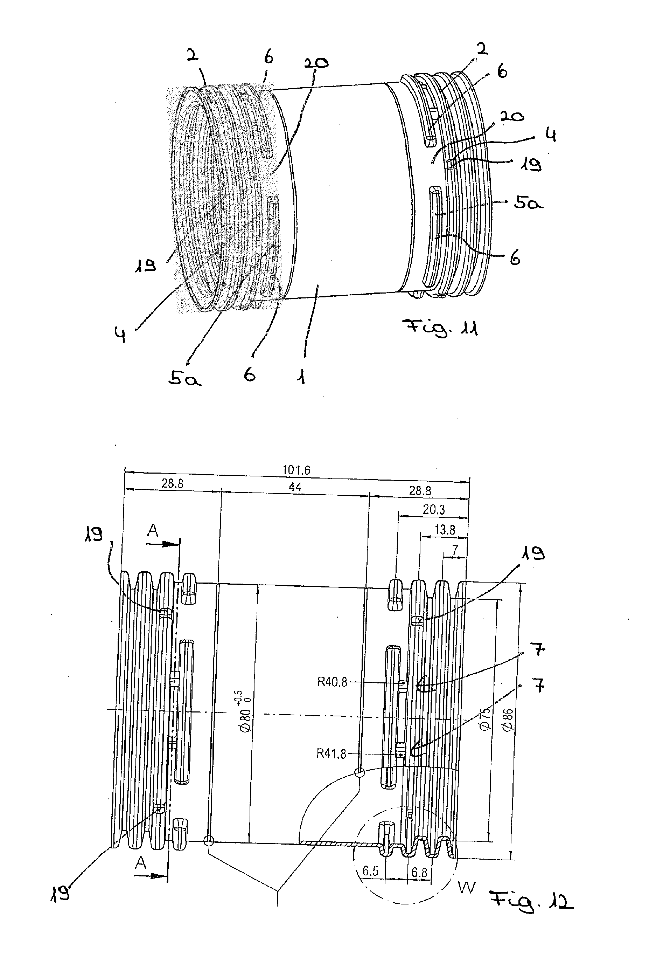

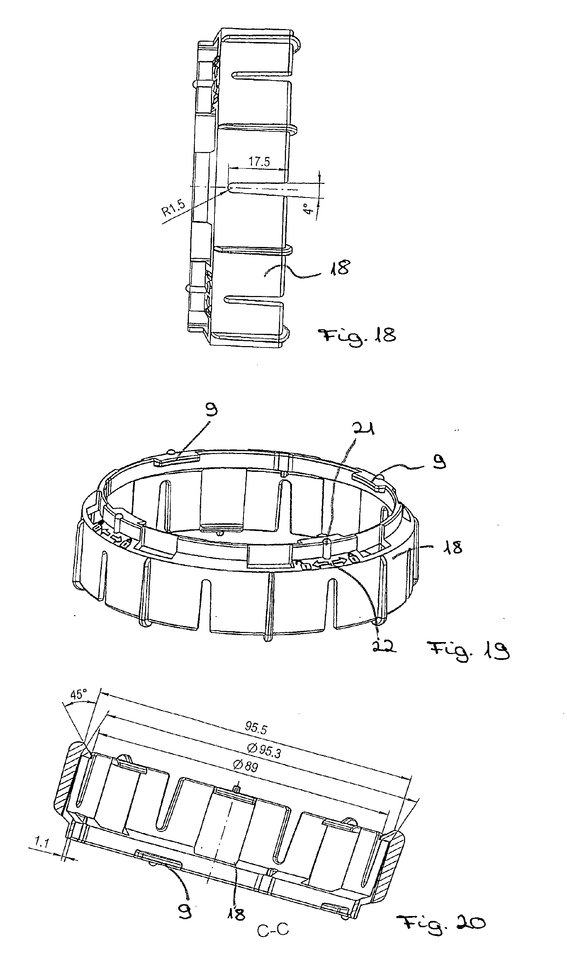

Bei dem in den Fig. 11 bis 17 ausschnittsweise dargestellten Abgasrohr 1 sind Markierungen 19 zu erkennen, die jeweils axial beabstandet und benachbart zu einem Umfangsspalt 20 (Umfangsabstand) zwischen zwei in Umfangsrichtung benachbarten Radialfortsätzen 6 der Bajonettverschlussmittel 5a des Abgasrohres 1 angeordnet sind und zwar in jeweils einer Welle 4. Bei den die Markierungen 19 tragenden Wellen 4 handelt es sich, vorteilhafter Weise, jedoch nicht zwingend, jeweils um die erste bzw. unmittelbar zu den Bajonettverschlussmitteln 5a benachbarten Wellen 4. Zu erkennen ist, dass die Markierungen 19, beispielsweise als Erhöhung in das Abgasrohr 1, genauer die Wellrohrabschnitte 2 eingeformt ist. Die Markierungen 19 kennzeichnen somit jeweils eine Umfangsposition, an der das in den Fig. 18 bis 25 gezeigte Sicherungselement 8_derart aufschiebbar ist, dass dessen sicherungselementseitige Bajonettverschlussmittel 9, die als nach radial innen ragende Fortsätze ausgebildet sind, axial zwischen zwei Radialfortsätzen 6 bzw. axial durch die Umfangsspalte 20 hindurch verschoben werden kann, um dann durch eine Drehbewegung mit den Positionierungshilfegeometriepaaren 7 in Wechselwirkung treten zu können. Den Markierungen 19 auf dem Abgasrohr 1 sind entsprechende Gegenmarkierungen 21 auf dem Sicherungselement 8 zugeordnet. Sobald sich Markierungen und Gegenmarkierungen 21 auf denselben Umfangswinkel befinden, also in axialer Richtung fluchten, kann das Sicherungselement 8 axial aufgeschoben oder abgezogen werden, gelangt also axial durch den Umfangsspalt 20 hindurch und trifft nicht axial auf einen Radialfortsatz 6.

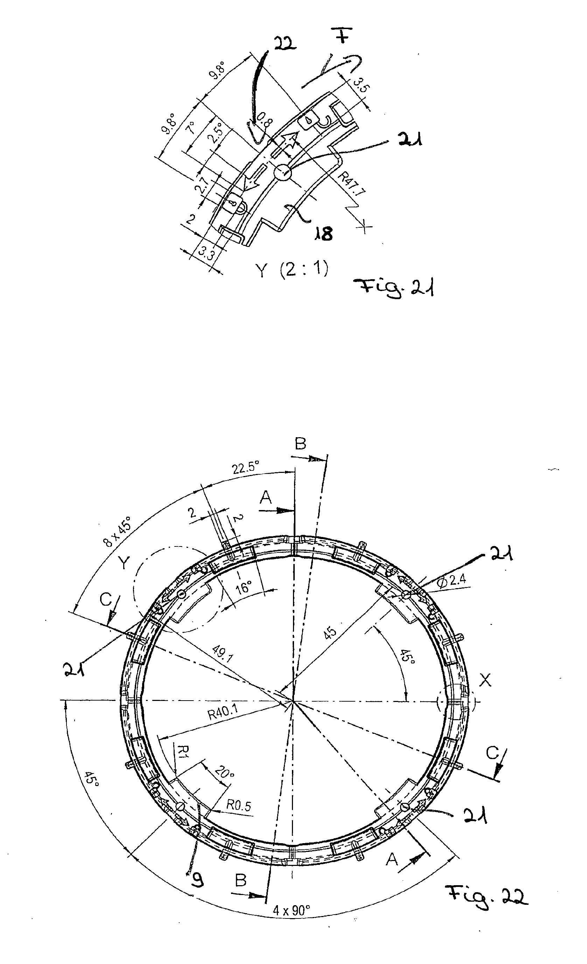

Wie sich aus Fig. 21 ergibt, sind zusätzlich zu mindestens einer Gegenmarkierung 21 Symbole 22, vorzugsweise als Einformung auf dem Sicherungselement 8 versehen, wobei ein offenes Schlosssymbol die Festziehumfangsrichtung F markiert und ein geschlossenes Schlosssymbol eine Löserichtung.

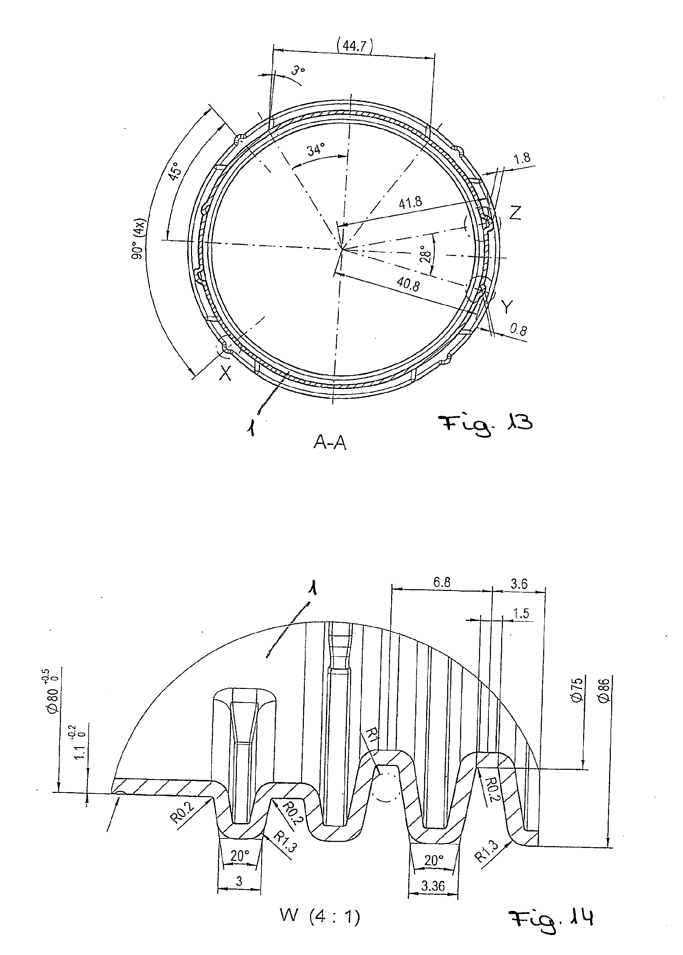

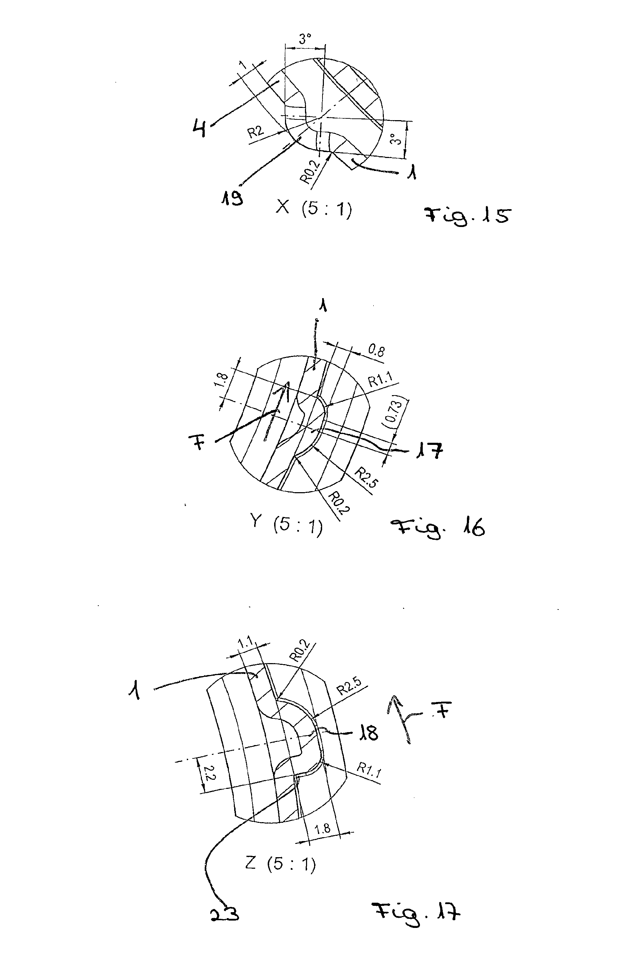

In Fig. 17 ist ein Detail Z aus Fig. 13 vergrößert dargestellt. Dabei handelt es sich um eine Anschlaggeometrie 18 zum Begrenzen der Verdrehbewegung des Sicherungselementes 8 in der Festziehumfangsrichtung F. Zu erkennen ist, dass die entgegen der Festziehumfangsrichtung F orientierte Anschlagswand 23 der als radiale Erhöhung ausgebildeten Anschlaggeometrie 18 näherungsweise in radialer Richtung verläuft, jedenfalls steiler ausgeführt ist als die in der Festziehumfangsrichtung F gelegene Wand.

In Fig. 16 ist eine Widerstandsgeometrie 17 eines Positionierungshilfegeometriepaares 7 gezeigt, wobei hier die in der Festziehumfangsrichtung F gelegene Wand steiler ist als die entgegen der Festziehumfangsrichtung F gelegene Wand, um ein Lösen der Bajonettverbindung haptisch markanter zu gestalten.

### Bezugszeichenliste

- 1: Abgasrohr
- 2: Wellrohrabschnitte
- 3: Glattrohrabschnitte
- 4: Welle
- 5: Sicherungsmittel
- 5a: Bajonettverschlussmittel des Abgasrohres
- 6: Radialfortsätze
- 7: Positionierungshilfegeometriepaare
- 8: Sicherungselement
- 9: sicherungselementseitige Bajonettverschlussmittel
- 10: Hintergriffabschnitte
- 11: Wechselwirkungsmittel
- 12: Abgasrohrsystem
- 13: Rohrstück
- 14: Ringnut
- 15: Ringdichtung
- 16: Ringwulst
- 17: Widerstandsgeometrie
- 18: Anschlaggeometrie
- 19: Markierungen
- 20: Umfangsspalt
- 21: Gegenmarkierungen
- 22: Symbole
- 23: Anschlagswand (Wandung)

- F: Festlegeumfangsrichtung
- Z: Detail

## Patentansprüche

1. Abgasrohr zur Abgasführung von Heizungsanlagen, insbesondere aus Kunststoff, vorzugsweise aus Polyamid, mit abwechselnd angeordneten starren Glattrohr- und biegbaren Wellrohrabschnitten (3, 2),
**dadurch gekennzeichnet,**
**dass** an das Abgasrohr (1) integrale, als Bajonettverschlussmittel (5a) ausgebildete Sicherungsmittel (5) angeformt sind, die derart ausgebildet sind, dass an diesen ein, bevorzugt hülsenförmiges, zu den Bajonettverschlussmitteln (5a) des Abgasrohres (1) korrespondierende sicherungselementseitige Bajonettverschlussmittel (9) aufweisendes Sicherungselement (8) durch eine axiale Steckbewegung sowie eine Drehbewegung relativ zum Abgasrohr (1) in eine Festlegeumfangsrichtung (F) zum Herstellen eines in axialer Richtung wirksamen Formschlusses festlegbar ist, und dass an das Abgasrohr (1) ein integrales Positionierungshilfegeometriepaar (7) angeformt ist, umfassend eine Anschlaggeometrie (18) zum Begrenzen der Relativerdrehbewegung in der Festlegeumfangsrichtung (F) sowie eine, vorzugsweise in der Festlegeumfangsrichtung (F) vor der Anschlaggeometrie (18) angeordnete, Widerstandgeometrie (17) zum Erhöhen des Kraftaufwandes an einer definierten Umfangsrelativposition von Abgasrohr (1) und Sicherungselement (8) beim Relativverdrehen des Sicherungselementes (8) und des Abgasrohres (1) beim Herstellen und/oder Lösen des in axialer Richtung wirksamen Formschlusses.

2. Abgasrohr nach Anspruch 1,
**dadurch gekennzeichnet,**
**dass** die Anschlagsgeometrie (18) als radiale Vertiefung oder radiale Erhöhung ausgebildet ist und/oder dass die Widerstandgeometrie (17) als radiale Vertiefung oder radiale Erhöhung ausgebildet ist, bevorzugt bezogen auf einen Außendurchmesser eines der Glattrohrabschnitte (3).

3. Abgasrohr nach einem der Ansprüche 1 oder 2,
**dadurch gekennzeichnet,**
**dass** die betragsmäßige Radialerstreckung der Anschlaggeometrie (18) nach radial innen oder nach radial außen größer ist, insbesondere mindestens doppelt so groß ist, wie die betragsmäßige Radialerstreckung der Widerstandsgeometrie (17) nach radial innen oder nach radial außen, bevorzugt gemessen ausgehend von einem Außendurchmesser eines der Glattrohrabschnitte (3).

4. Abgasrohr nach einem der vorhergehenden Ansprüche,
**dadurch gekennzeichnet,**
**dass** die Widerstandsgeometrie (17) in der Festziehumfangsrichtung vor der Anschlaggeometrie (18) angeordnet und/oder von dieser in Umfangsrichtung beabstandet ist.

5. Abgasrohr nach einem der vorhergehenden Ansprüche,
**dadurch gekennzeichnet,**
**dass** die Anschlaggeometrie (18) und/oder die Widerstandsgeometrie (17) auf einer von einem Aufstecken des Abgasrohres (1) zum Aufstecken des Sicherungselementes (8) abgewandten Seite der Bajonettverschlussmittel (5a) angeordnet sind.

6. Abgasrohr nach einem der vorhergehenden Ansprüche,
**dadurch gekennzeichnet,**
**dass** die Bajonettverschlussmittel (5a) mindestens zwei in Umfangsrichtung beabstandete, vorzugsweise auf derselben Axialposition angeordnete Radialfortsätze (6) zum Zusammenwirken mit den Bajonettverschlussmitteln (9) des Sicherungselementes (8) in der Art eines Bajonettverschlusses aufweisen, wobei bevorzugt ein Abstand zwischen Anschlaggeometrie (18) und der Widerstandsgeometrie (17) des Positionierungshilfegeometriepaares (7) kleiner oder gleich ist der Umfangserstreckung eines der Radialfortsätze (6).

7. Abgasrohr nach einem der vorhergehenden Ansprüche,
**dadurch gekennzeichnet,**
**dass** jedem Glattrohrabschnitt (3) Bajonettverschlussmittel (5a) und mindestens ein Positionierungshilfegeometriepaar (7) zugeordnet sind, vorzugsweise entweder nur im Bereich eines axialen Endes oder an beiden axialen Endbereichen des jeweiligen Glattrohrabschnittes (3).

8. Abgasrohr nach einem der vorhergehenden Ansprüche,
**dadurch gekennzeichnet,**
**dass** die Wellrohrabschnitte (2) jeweils mehrere ringförmige und in axial benachbarten, parallelen Radialebenen bezogen auf eine Axialerstreckung des Abgasrohres (1) angeordnete Wellen (4) aufweisen und/oder dass die Wellen (4) der Wellrohrabschnitte (2) eine Außengewindekontur bilden, und dass die Bajonettverschlussmittel axial benachbart zu den Wellen (4), insbesondere in einem an einen Glattrohrabschnitt (3) angrenzenden Bereich vorgesehen sind.

9. Abgasrohr nach einem der vorhergehenden Ansprüche,
**dadurch gekennzeichnet,**
**dass** die Bajonettverschlussmittel (5a) und/oder die Anschlaggeometrie (18) und/oder die Widerstandgeometrie (17) von der Abgasrohrinnenseite her betrachtet als sich nach radial außen und bevorzugt in Umfangsrichtung erstreckende Vertiefung ausgebildet sind.

10. Abgasrohr nach einem der vorhergehenden Ansprüche,
**dadurch gekennzeichnet,**
**dass** eine Abgasrohrwandstärke der Bajonettverschlussmittel (5a) einer Abgasrohrwandstärke eines Glattrohrabschnitts (3) und/oder eines Wellrohrabschnittes (2) entspricht, insbesondere derart, dass die Wandstärke des Abgasrohrs (1) axial durchgängig, zumindest näherungsweise, konstant ist.

11. Verwendung eines Abgasrohrabschnittes mit mindestens einem Glattrohrabschnitt (3) und mindestens einem Wellrohrabschnitt (2) sowie mit integralen Sicherungsmitteln (5), der erhalten ist durch Abtrennen von einem Abgasrohr (1) nach einem der vorhergehenden Ansprüche, zur Abgasführung von Abgas einer Heizungsanlage, insbesondere in einem Gebäude.

12. Abgasrohrsystem, umfassend ein Abgasrohr (1), insbesondere nach einem der Ansprüche 1 bis 10, mit abwechselnd angeordneten starren Glattrohr- und biegbaren Wellrohrabschnitten (3, 2), wobei an das Abgasrohr (1) integrale, als Bajonettverschlussmittel (9) ausgebildete Sicherungsmittel (7) angeformt sind, die derart ausgebildet sind, dass an diesen ein, bevorzugt hülsenförmiges, Sicherungselement (8) durch eine axiale Steckbewegung und eine Drehbewegung relativ zum Abgasrohr (1) in eine Festlegeumfangsrichtung (F) zum Herstellen eines in axialer Richtung wirksamen Formschlusses festlegbar ist, oder umfassend einen aus einem derartigen Abgasrohr (1) abgetrennten Abgasrohrabschnitt, mit mindestens einem Glattrohrabschnitt (3), bevorzugt mit zwei endseitigen Glattrohrabschnitten (3), und mit mindestens einem biegbaren Wellrohrabschnitt (2), weiter umfassend ein bevorzugt hülsenförmiges Sicherungselement (8), aufweisend mit den Bajonettverschlussmitteln des Abgasrohres (5a) korrespondierende sicherungselementseitige Bajonettverschlussmittel (9), vorzugsweise umfassend nach radial innen weisende Bajonettverschlussgegenabschnitte, zum Zusammenwirken mit den Bajonettverschlussmitteln (5a) des Abgasrohres (1) oder des Abgasrohrabschnittes in der Art eines Bajonettverschlusses zur Herstellung eines in axialer Richtung wirksamen Formschlusses,
wobei an das Abgasrohrsystem (12), insbesondere an das Abgasrohr (1) bzw. den Abgasrohrabschnitt und/oder an das Sicherungselement (8) ein integrales Positionierungshilfegeometriepaar (7) angeformt ist, umfassend eine Anschlaggeometrie (18) zum Begrenzen der Relativerdrehbewegung in der Festlegeumfangsrichtung (F) sowie eine, vorzugsweise in der Festlegeumfangsrichtung (F) vor der Anschlaggeometrie (18) angeordnete, Widerstandgeometrie (17) zum Erhöhen des Kraftaufwandes an einer definierten Umfangsrelativposition von Abgasrohr (1) und Sicherungselement (8) beim Relativverdrehen des Sicherungselementes (8) und des Abgasrohres (1) beim Herstellen und/oder Lösen des in axialer Richtung wirksamen Formschlusses.

13. Abgasrohrsystem nach Anspruch 12,
**dadurch gekennzeichnet,**
**dass** an dem mit dem Positionierhilfegeometriepaar (7) in Wechselwirkung tretenden Bauteil, insbesondere dem Abgasrohr (1) bzw. dem Abgasrohrabschnitt oder dem Sicherungselement (8) Wechselwirkungsmittel (11) zum Zusammenwirken mit dem Positionierhilfegeometriepaar (7), insbesondere in Form der Bajonettverschlussmittel (5a) des Abgasrohres (1) bzw. Abgasrohrabschnittes oder in Form der Bajonettverschlussmittel (9) des Sicherungselementes (8) vorgesehen sind.

14. Abgasrohrsystem nach einem Anspruch 12 oder 13,
**dadurch gekennzeichnet,**
**dass** die Widerstandsgeometrie (17) von den Wechselwirkungsmitteln (11) in Umfangsrichtung überdrehbar ist und/oder dass die Anschlaggeometrie (18) von den Wechselwirkungsmitteln (11) nicht in Umfangsrichtung überdrehbar ist oder alternativ nur unter Aufbringung eines Drehmomentes überdrehbar ist, welches größer ist, insbesondere mindestens doppelt so groß ist, wie das Drehmoment, das zum Überdrehen der Widerstandgeometrie (17) aufgebracht werden muss.

15. Verfahren zum Festlegen eines Abgasrohres oder eines hiervon abgetrennten Abgasrohrabschnittes, umfassend mindestens einen Glattrohrabschnitt (3), bevorzugt mindestens zwei Glattrohrabschnitte (3) und mindestens einen Wellrohrabschnitt (2) an einem, bevorzugt als Muffenrohr ausgebildeten, bevorzugt eine innenliegende Dichtung zur äußeren Anlage an einem der Glattrohrabschnitte (3) ausgebildeten Ringdichtung (15) aufweisenden, Rohrstückes (13) unter Verwendung eines Abgasrohrsystems nach einem der Ansprüche 12 bis 14, mit den Schritten:
- Einstecken eines Glattrohrabschnittes (3) des Abgasrohres (1) oder des Abgasrohrabschnittes in das Rohrstück (13), und
- Relativverdrehen eines Bajonettverschlussmittel aufweisenden, bevorzugt hülsenförmigen, Sicherungselementes (8) relativ zu dem Abgasrohr (1), derart, dass ein axial wirksamer Formschluss erreicht wird, wobei während des Relativverdrehens die Widerstandgeometrie (17) von Wechselwirkungsmitteln (11) in Umfangsrichtung überdreht und die Relativverdrehbewegung durch eine Wechselwirkung der Wechselwirkungsmittel (11) mit der Anschlagsgeometrie (18) begrenzt wird.
